# EUROPEAN PATENT SPECIFICATION

(11) **EP 2 896 472 B1**
(45) Date of publication and mention of the grant of the patent: **09.10.2019**
(21) Application number: 13794787.5
(22) Date of filing: 09.08.2013
(51) Int. Cl.: B21K 1/28, B21H 7/00

(54) **PRESS MOLDING METHOD FOR MAKING A STEEL ROTOR CORE**
PRESSFORMUNGSVERFAHREN ZUR HERSTELLUNG EINES ROTORKERNS AUS STAHL
PROCÉDÉ DE FORMAGE À LA PRESSE D'UN NOYAU DE ROTOR EN ACIER

(30) Priority: 09.08.2012 JP 2012177571
(43) Date of publication of application: 22.07.2015
(73) Proprietor: Sigma & Hearts Co. Ltd., Samutprakarn 10540 (TH)
(72) Inventor: NUKA, Motoharu, Bangsaothong Samutprakarn 10540 (TH); NOGUCHI, Takayo, Konan-shi Shiga 520-3102 (JP); MURAMATSU, Tsuyoshi, Bangsaothong Samutprakarn 10540 (TH)
(74) Representative: Schön, Christoph
(86) International application number: PCT/JP2013/071685
(87) International publication number: WO 2014/025022

(56) References cited:
- FR-A1- 2 508 356
- JP-A- H1 177 227
- JP-A- 2002 320 362
- JP-A- 2002 320 362
- JP-A- 2003 112 229
- JP-A- 2011 189 357
- JP-B1- S4 940 068
- US-A- 4 041 754
- US-A- 4 117 793
- US-A1- 2002 138 968

## Description

### Technical Field

The present invention relates to a cold-press molding method using a cold-press molding apparatus, wherein the cold-press molding apparatus can reduce burrs generated in between the backside tool without high grade lubrication films especially on molding a steel rod-like rotor core material with axially taper shape protruding portions and can extend the life of the molding tool.

### BACKGROUND

It is difficult to process a taper shape steel rod-like protruding material by direct extrusion because of requirement of high processing pressure. Accordingly, in general, a preshaped material processable using relatively low processing pressure is manufactured by such as cold forging in advance and then the material is processed to obtain a taper shape processed material by ironing in the axis direction.

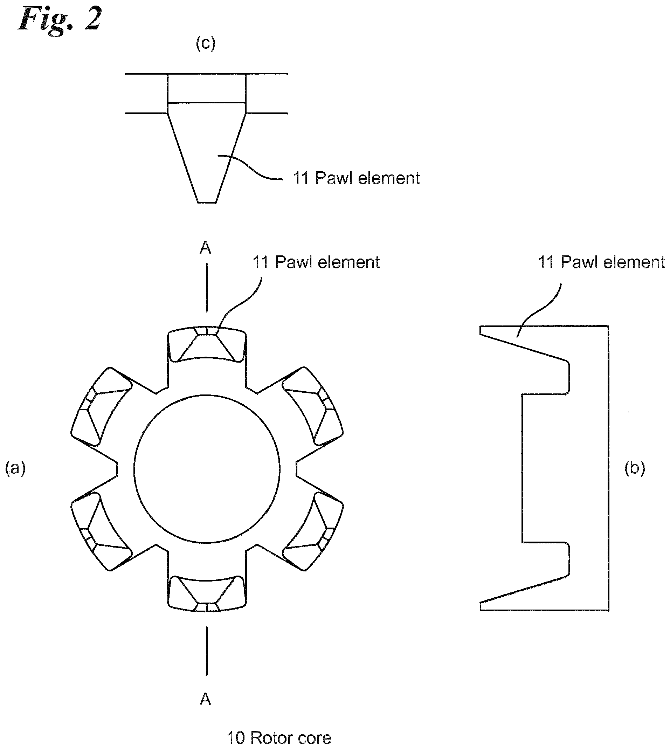

Fig. 2 illustrates a rotor core 10 of an automobile alternating-current generator in which the taper shape pawl element is shaped, in which (a) is a cross section view of plane vertical to the axis of the rotor core 10, (b) is a vertical cross section view at a plane A-A passing the axis of the rotor core 10, and (c) is a side view of one of the pawl elements 11.

While such taper shape material, in general, is made by hot forging, warm forging or cold forging, it is problematic that abrasion of a mold is severe in warm forging and hot forging and stability of the shape is bad. Accordingly, in general, the shape is stabilized for use by a machine work after shaping. Further, a material having a long pawl element or an acicular shape end of the pawl element cannot be manufactured by using traditional method because of requirement of very high shaping pressure.

Further, it is possible to shape such long pawl element or an acicular shape end of the pawl element using direct cold-press forging, but it is problematic because of difficulty in requirement of very high pressure. Accordingly, an intermediate material is preshaped by such as cold forging and then the preshaped material thereof is processed to obtain a desired shape.

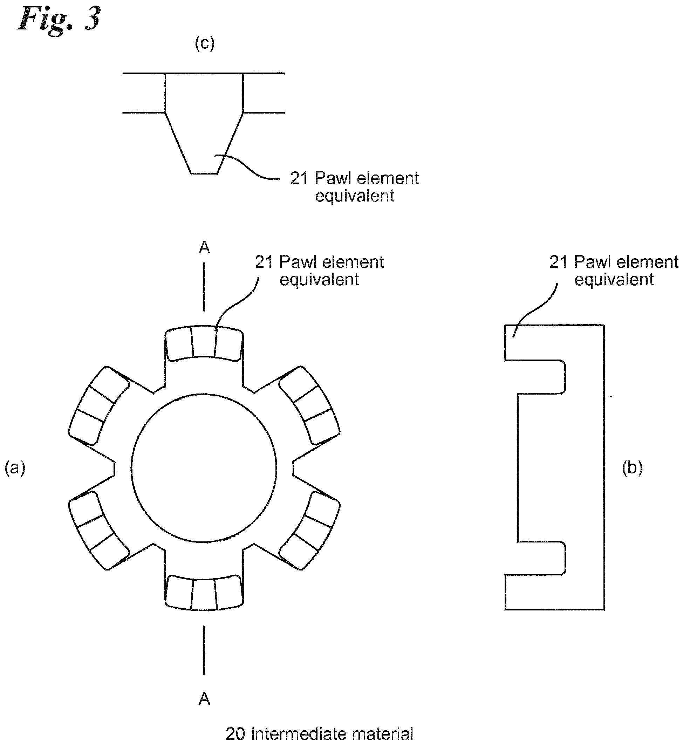

Fig. 3 is a view of the preshaped material preshaped by such as cold forging, in which (a) is a cross section view of vertical plane to an axis of the intermediate material, (b) is a vertical cross section view at a plane A-A passing the axis of the intermediate material, and (c) is a side view of one of pawl element equivalent of the intermediate material. Referring to Fig., the intermediate material 20 is preshaped by such as cold forging and the preshaped pawl element equivalent 21 is widened to an appropriate angle and then ironing is carried out to obtain the desired shape.

The important thing in such ironing processing is to prevent baking and galling between a tool and a processed material because it is a slide processing in which the ironing tool and the steel processed material contact directly under high pressure. Accordingly, high grade lubrication films such as phosphate films must be made on the surface of the processed material.

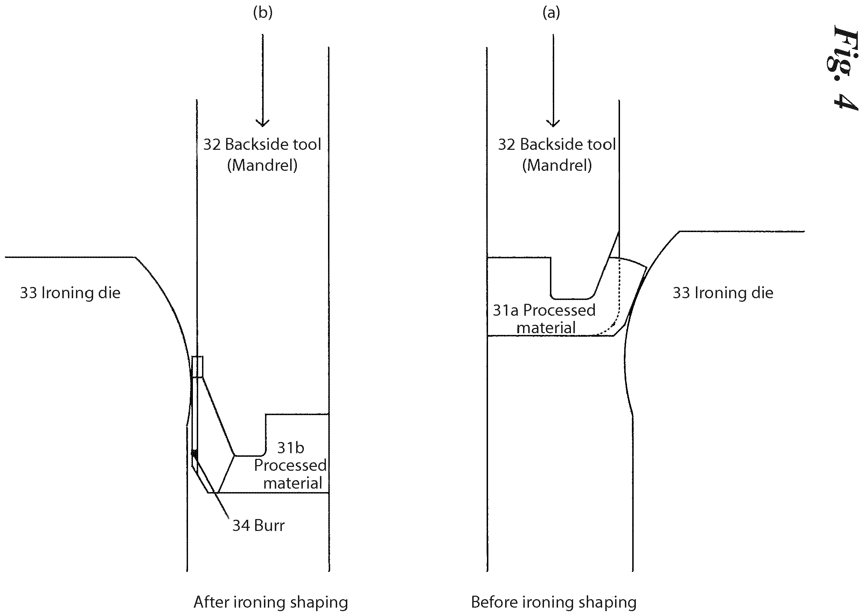

Fig. 4 is a diagram illustrating the relationship between a processed material on traditional slide-press processing and an ironing die, in which (a) illustrates positions and shapes of the processed material 31a and the backside tool (mandrel) 32 and the ironing die 33 before ironing shaping and (b) illustrates positions and shapes of the processed material 32b and the backside tool (mandrel) 32, and the ironing die 33 and a burr 34 after ironing shaping, wherein those are symmetrically arranged before and after ironing shaping.

Referring to Fig., 31a is a processed material before ironing shaping, 31b is a processed material after ironing shaping, 32 is a backside tool (mandrel), 33 is a ironing die and 34 is a burr occurred between the backside tool (mandrel) and the processed material.

As described above, as well as mandatorily better lubrication films on the surface of the processed material in the cold-press shaping by slide-press, and variation of quality should be minified.

Further, for example. as described in Patent Document 1, a means to lower the friction coefficient between the surface of the shaping tool and the processed material by coating the surface of the shaping tool with rigid films is required to extend the life of the shaping tool, e.g. an ironing tool.

FR 2 508 356 A1, on which the preamble of claim 1 is based, discloses a metal shaping process, wherein a punch or male tool is used to drive a blank between rollers collectively constituting a female tool, being of application in the manufacture of polar wheels for vehicle alternators. Shaping is effected by the rollers flattening the blank onto the punch with a controlled reduction in blank thickness. The punch axially reciprocates with a free end configuration matching that required inside the finished work. The rollers are mounted rotatably on a sub-frame with their axes normal to that of the punch. The punch and blank pass between rollers during the drive stroke, the generators of individual rollers matching part of the lateral external profile of the finished work.

### Prior Art

### Patent Document

Patent Document: Laid Open JP 2003-112229

### Description

### Objects to be solved

However, there were the following problems in the traditional cold-press shaping method. (1) If variation of quality of lubrication films occurs, the pressure to the backside tool (mandrel) varies and variation of the backside shapes may be caused, and homogeneous lubrication films are mandatory, accordingly. (2) Further, in this method, it is problematic that the result due to variation of quality severely depends on the right-or-wrong quality of the lubrication films, and if unsatisfactory lubrication films are used, unsatisfactory shaping of the backside likely result from that the increased friction results in plastic flow of the processed material largely occurs due to frication holding and the burr occurred in between the backside tool (mandrel) should be large. (3) It is not avoidable that the burr in between the backside tool (mandrel) occurs somewhat because the ironing tool slides on the surface of the processed material under high pressure. Further, it is problematic that an effect on the life of the tool must be considered because a load should occur on the ironing tool as well.

Accordingly, the purpose of the present invention is to provide a cold-press molding method using a cold-press molding apparatus, wherein the cold-press molding apparatus that can reduce burrs generated in between the backside tool without high grade lubrication films on molding a steel rod-like rotor core material with axially taper shape protruding portions, can carry out shaping of the backside tool in better way, and can extend the life of the molding tool.

### Means to solve the objects

A cold press molding method of the present invention to make a steel rod-like rotor core material with axially taper shape protruding portions comprising the steps of holding a preshaped processed material on a backside tool and rolling a free rotation roll freely rotating on the processed material toward the tip of a protruding element while press-contacting so as to plastic-reshape said processed material to a taper shape, characterized in that the cold-press molding method further comprises a step of controlling a processing temperature by adjusting size and rotation rate of the free rotation roll and by cooling the roll.

In the above constitution, the preshaping of the processed material is preferably conducted by cold forging, warm or hot forging.

### Effects of the invention

As described above, according to the present invention,
given holding the preshaped processed material on a backside tool (mandrel) and rolling the free rotation roll freely rotating on the processed material toward the tip element while press-contacting, the shaping can be conducted at lower temperature because generated processing heat is transferred to the rotating roll, no high grade lubricant is required and further, an effect of variation of lubricants can be little.

In addition, since a maximum load on shaping is mostly linear load, load can be used more efficiently and further thermal expansion of the tool becomes less because temperature rising is suppressed by thermal transfer to the roll so that occurrence of burr on the pressed surface can be less and the shaping of the backside element can be conducted with sufficient precision. Further, the life of the shaping tool can be extended because the load on the shaping tool is less.

Further, given using the cold-press molding apparatus as described above, because the cold-press molding can be easily conducted according to the method thereof, a steel rod-like rotor core material with axially taper shape protruding portism can be cold-press molded without high grade lubrication films, with reducing burrs generated in between the backside tool and further with better shaping of the backside element, and the life of the apparatus per se can be extended as well.

Further, as for a rotor core (rotator) of an automobile alternating-current generator, the structure having long-pawl or a sharp angle tip, which is difficult to be made using the traditional shaping method, can be easily and effectively made at low cost.

### BRIEF DESCRIPTION OF THE DRAWINGS

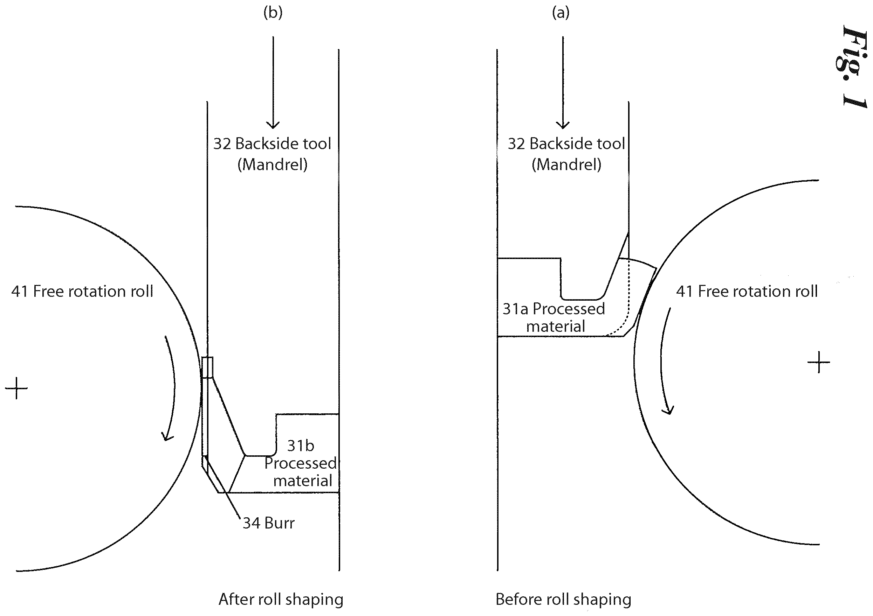

Fig. 1 illustrates a view of a cold-press molding apparatus as described above, in which (a) is a figure illustrating positions and shapes of a processed material and a backside tool (mandrel) and a free rotation roll before ironing and (b) is a figure illustrating positions and shapes of the processed material and the backside tool (mandrel), and the free rotation roll and a burr after ironing.
Fig. 2 illustrates a rotor core of an automobile alternating-current generator, in which (a) is a cross section view of plane vertical to the axis of the rotor core, (b) is a vertical cross section view at a plane A-A passing the axis of the rotor core, and (c) is a side view of one of the pawl elements.
Fig. 3 is the view of the preshaped intermediate material, in which (a) is a cross section view of vertical plane to an axis of the intermediate material, (b) is a vertical cross section view at a plane A-A passing the axis of the intermediate material, and (c) is a side view of one of pawl element equivalent of the intermediate material.
Fig. 4 is a diagram illustrating the relationship between a processed material on traditional slide-press processing and ironing die, in which (a) illustrates positions and shapes of the processed material and the backside tool (mandrel) and the ironing die before ironing shaping and (b) illustrates positions and shapes of the processed material and the backside tool (mandrel), and the ironing die and a burr after ironing shaping.

### Embodiment

According to Embodiment of the present invention, referring to Figs., the inventors illustrate detail of, a method of cold-press molding using a cold-press molding apparatus. Also, the inventors illustrate details of the cold-press molding apparatus and a rotor core of an automobile alternating-current generator manufactured using the cold-press molding method thereof as described above.

Fig. 1 illustrates a cold-press molding apparatus as described above. Since the same contents as in Fig. 4 have the identical sign, an overlapped explanation is skipped, but according to the present Embodiment, the preshaped processed material 31 (31a, 31b) by cold forging shown in Fig. 3 is cold-press-molded by rolling press with the free rotation roll 41.

Specifically, on processed material 31 (31a, 31b) held by a backside tool (mandrel) 32, while a free rotation roll 41 freely rotating is being press-contacted, the free rotation roll 41 is rolled toward the taper shaped tip element of the pawl element 11, and the processed material 31 (31a, 31b) is plastic-reshaped by the rolling to shape the taper shape shown in Fig. 2. Accordingly, the rotor core 10 of an automobile alternating-current generator is made by shaping the taper shape pawl element.

According to such rolling press, as the free rotation roll 41 is contacting the surface of the processed material 31 (31a 31b) while rolling, almost no relative sliding between the free rotation roll 41 and the processed material 31 exists, the relative friction is less and the processing temperature can be suppressed by heat transfer. Further, processing temperature is controlled by adjusting the size and rotation rate of the free rotation roll 41 and cooling of the roll. Accordingly, a lubricant such as high grade phosphate film on the surface of the processed material 31 (31a, 31b) is not needed and further, an effect of variation of lubrication property of the lubricant is less.

Accordingly, because variation of pressure on the backside tool (mandrel) 32 becomes less, occurrence of variation of backside shape is less, and further less burr 34 occurs. Accordingly, it is easy to remove the burr 34 and the lesser burr 34 occurs, the lower material loss .

Further, the contact pressure load for the free rotation roll 41 is lesser than the ironing die therefor as a shaping tool so that the life of the free rotation roll 41 as a ironing tool can be longer than the ironing die.

As described above, slide between the free rotation roll 41 and the surface of the processed material 31 (31a, 31b) is almost none and the friction decreases so that the high grade metal hardening layer on the surface thereof is unnecessary to be installed. Further, accordingly, use of such as mechanical oil can be satisfactory on the surface of the precessed material 31 (31a, 31b).

As described above, according to the present Embodiment, given holding the preshaped processed material on a backside tool (mandrel) and rolling the free rotation roll freely rotating on the processed material toward the tip element while press-contacting, no high grade lubricant is needed and further, an effect of variation of lubricants can be little. Further, the load is changed from surface load to linear load so that the transmission efficiency of the load can be improved.

A production of a rotor core of an automobile alternating-current generator, of which the structure has a long-pawl or a sharp angle tip, which is difficult to be made using the traditional shaping method, has become possible by using this method. Accordingly, the less burr on the pressed surface occurs so that the shaping of the backside element can be conducted with satisfactory precision. Further, the life of the shaping tool can be extended because the load on the shaping tool is less.

Further, according to the above Embodiment, preshaping of the processed material 31 is illustrated based on Embodiment of cold forging, but it is not limited and warm forging and hot forging can be used. Field of the Invention

Since the present invention comprising the above constituent can be implemented as described above so that steel rod-like rotor core material with axially taper shape protruding portions can be relatively easily processed, and can be applied in a variety of productions of machines having complicated structure including a motor, a generator, an automobile, a vehicle, a combustion engine, a printing machine, a paper making machine, a yarn-making machine, and a loom.

### Reference of sign

10 Rotor core
11 Pawl element
12 Intermediate material
13 Pawl element equivalent
14 Pulling apparatus
31, 31a, 31b Processed material
32 Backside tool (mandrel)
33 Ironing die
34 Burr
41 Free rotation roll

## Claims

1. A cold-press molding method to make a steel rod-like rotor core material with axially taper shape protruding portions comprising the steps of holding a preshaped processed material (31) on a backside tool (32), and rolling a free rotation roll (41) freely rotating on the processed material (31) toward the tip of a protruding element while press-contacting so as to plastic-reshape said processed material (31) to a taper shape, **characterized in that** the cold-press molding method further comprises a step of controlling a processing temperature by adjusting size and rotation rate of the free rotation roll (41) and by cooling the roll.

2. A cold-press molding method of Claim 1 **characterized in that** the preshaping of said processed material (31) is conducted using cold forging, warm forging or hot forging.

## Patentansprüche

1. Kaltpress-Formverfahren zur Herstellung eines stabförmigen Rotorstahlkernmaterials mit axial sich verjüngenden hervortretenden Bereichen, wobei das Verfahren die Stufen eines Haltens eines vorgeformten verarbeiteten Materials (31) auf einer rückwärtigen Vorrichtung (32) und eines Walzens einer frei drehbaren Walze (41), die sich frei auf dem verarbeiteten Material (31) dreht, in Richtung der Spitze eines vortretenden Elements unter gleichzeitigem Presskontaktieren, um dadurch das verarbeitete Material (31) in eine sich verjüngende Form plastisch umzuformen, **dadurch gekennzeichnet, dass**
das Kaltpress-Formverfahren des Weiteren eine Stufe des Steuerns einer Verarbeitungstemperatur durch Einstellen der Größe und der Rotationsgeschwindigkeit der frei drehbaren Walze (41) und durch Kühlen der Walze umfasst.

2. Kaltpress-Formverfahren nach Anspruch 1, **dadurch gekennzeichnet, dass**
das Vorformen des verarbeiteten Materials (31) unter Verwendung von Kaltschmieden, Warmschmieden oder Heißschmieden durchgeführt wird.

## Revendications

1. Procédé de formage à la presse à froid destiné à fabriquer un matériau de noyau de rotor du genre tige en acier avec des parties faisant saillie axialement de façon conique, comprenant les étapes de maintien d'un matériau transformé préformé (31) sur un outil arrière (32), et de roulement d'un rouleau en rotation libre (41) tournant librement sur matériau transformé (31) vers la pointe d'un élément saillant tout en établissant un contact par pression de manière à reformer plastiquement ledit matériau transformé (31) en une forme conique, **caractérisé en ce que** le procédé de formage à la presse à froid comprend en outre une étape de régulation d'une température de traitement en réglant la taille et la vitesse de rotation du rouleau en rotation libre (41) et en refroidissant le rouleau.

2. Procédé de formage à la presse à froid selon la revendication 1, **caractérisé en ce que** le préformage dudit matériau transformé (31) est réalisé par forgeage à froid, par forgeage tiède ou par forgeage à chaud.
